# EUROPEAN PATENT APPLICATION

(11) **EP 0 591 527 A1**
(43) Date of publication of application: **13.04.1994**
(21) Application number: 91912071.7
(22) Date of filing: 27.06.1991
(51) Int. Cl.: B23Q 5/32, B23K 10/00, B23Q 1/16, B23K 9/28

(54) **DEVICE FOR MOVING TOOL GRIPPER AND METHOD OF DRAWING MOTION PATH**

(71) Applicant: KABUSHIKI KAISHA KOMATSU SEISAKUSHO, Minato-ku Tokyo 107 (JP)
(72) Inventor: ABE, T., Techn. Inst. of K K Seisaskusho,, Kanagawa-ken 254 (JP); TAKECHI, H., Techn. Inst. OF K K Seisakusho,, Kanagawa-ken 254 (JP)
(74) Representative: Grünecker, Kinkeldey, Stockmair & Schwanhäusser Anwaltssozietät
(86) International application number: JP9100872
(87) International publication number: WO9300199

(57) **Abstract**

A tool gripper moving device small in size, light in weight, and capable of moving a tool at high speed and with high precision; and a method of drawing a motion path of said tool. The device is provided with two motors (3, 4), rotating bodies (11, 13) driven by said motors, and a tool (19) supported in an eccentric relation with the rotating bodies, thereby producing two kinds of rotational motions of the rotating bodies whose rotational centers are different from each other and controlling these rotational motions at the same time to move the tool only. In the method of drawing a motion path of the tool, an approaching path (b) from the motion starting point (e) of the tool to the entry point (g) of the motion path is tangential to a motion path (a) of the tool.

## Description

### FIELD OF THE INVENTION

The present invention relates to a device for movably supporting a toll on a tool holding portion of an industrial robot and so forth or a moving table of an industrial machines, and a method for plotting a moving path of the tool.

### BACKGROUND OF THE INVENTION

In the conventional industrial robot or so forth, when movement of a holding portion supporting a machining tool is required, a construction for moving the holding portion per se is typically not provided. Therefore, the holding portion is moved by moving a robot body or an arm near the robot body. This requires large horse power for moving the holding portion at high speed and can achieve merely low precision in positioning. For example, there has been proposed in shown in Japanese Examined Utility Model Publication **55**-**46473**, that two driving power source are provided on arm portion supporting the holding portion of the industrial robot, in which a gear connected to one of the driving power source via a drive shaft **21** is connected to a rack to linearly move a machining tool **27** mounted on the rack **25**, a gear **24** connected to the other driving power source via a drive shaft **22** drives a frame **26** supporting the rack to rotate for rotatingly moving the machining tool **27**. By this, only the machining tool **27** mounted on the holding portion can be moved without moving the robot body or so forth.

As set forth above, in the prior art, since the rack **25** is supported for linear movement by the portion of the frame **26**, it becomes necessary to make the supporting portion for the rack **25** strong. Also, since the machining tool is moved by rotating the frame **26** per se, it is necessary to make the frame **26** and the portion supporting the frame **26** strong. This results in increasing of the weight of the tool holding portion and tends to affect for high speed movement, precision in positioning and so forth.

On the other hand, as the moving device of this kind, there are some devices, in which the machining tool, such as a plasma arc cutting torch or so forth in moved is moved by controlling rotation of two eccentric shafts to form pattern, such as circle, quadrangle, triangle, elongated hole or so forth for cutting along the pattern, has been known in the prior art. The precision of such devices is significantly influenced by connection between cutting start point and cutting end point during cutting of the work piece along various patterns by operating the torch as set forth above.

It is the conventional method for plotting a motion path (cutting trace) of the tool in the above-mentioned conventional device, in which, when the torch performs cutting along a circular trace, the motion path of the torch first extends through a radial preparatory motion path **b** from an origin of the compass coordinates toward a motion path **a**, and subsequently, from the intersection with the motion path, it extends along the original motion path **a**, as shown in **Fig**. **2**. Thus, the transition from the preparatory motion path **b** to the motion path **a** is perpendicularly bent line.

In the conventional path control method, in case of the high speed plotting at the motion speed of the torch higher than or equal to 2 m/min, it can be caused overrunning **c** or rounding **d** at the transition to the motion path **a**, as shown in **Fig**. **3**. Also, since the paths are angled (approximately 90°) at the transition, the torch has to be temporarily stopped at the transition to cause problem, such as over-melding when plasma arc cutting machine or so forth is used.

On the other hand, in the above-mentioned conventional motion path plotting method, the starting point of the preparatory motion path **b** is located at the center of the motion path **a**, i.e. the origin of the compass coordinate system to make angular velocity control for the motor difficult. This becomes significant constraint for the preparatory motion path.

### SUMMARY OF THE INVENTION

The present invention has been worked out in view of the circumstance set forth above. Therefore, it is the first object of the present invention to provide a device which can easily plot a preparatory motion path curve and can move a tool at high speed and at high accuracy.

A second object of the present invention is to provide a motion path plotting method in a tool moving device which can easily plot a preparatory motion path curve, and can improve a path tracing accuracy at high speed.

In order to accomplish the above-mentioned first object, a tool holding portion moving device for an industrial robot or so forth comprises:
a frame rigidly secured on an arm of the industrial robot or so forth;
two motors supported on the frame;
two rotary bodies supported in the frame in eccentric fashion relative to each other and driven independently by each of the motors;
a single tool holding portion eccentrically arranged relative to both of the rotary bodies and supported on these rotary bodies to be transmitted mutually different rotational motion from the two rotary bodies; and
a control device simultaneously controlling revolution of the two motors.

In order to accomplish the second object of the invention, a method for plotting a tool motion path comprises the steps of controlling rotation of two rotary bodies rotatably supported within a frame in eccentric fashion, moving a tool supported by a tool holding portion located eccentrically on the rotary bodies for moving the tool along a desired motion path, wherein a preparatory motion path between a motion start point to an entry point into a motion path, extends in tangential direction to the motion path.

With the above-mentioned first aspect, the two motors and two rotary bodies driven by the motors are employed in the tool holding portion of the industrial robot or so forth to generate two rotational motions with mutually different centers to cause motion of the tool holding portion, namely machining tool by controlling two rotational motions simultaneously. With such tool holding portion moving device, since it becomes unnecessary to have a construction to support a rack to cause linear movement at the tip end of an arm to make the device compact and light weight and to allow motion of the machining tool at high speed and high accuracy.

On the other hand, with the tool holding portion moving device, since the machining tool always moves in the vicinity of the center in the frame rigidly fixed to the arm, the motion of the machining tool can be performed with maintaining good balance.

Also, according to the second aspect, since no overrunning and rounding may be caused at the entry point into the tool motion path, since the motion path can be plotted without temporarily stopping of the machining tool at the entry point, and since speed variation of the motor driving two eccentrically arranged shafts at the start point, it becomes easily to control the angular velocity of the motor at this position. This makes it easy to establish a curve of the preparatory motion path. Thus, it becomes possible to improve a path accuracy at high speed.

The above-mentioned and other objects, aspects and advantages of the present invention will become clear to those skilled in the art from the discussion described and illustrated in connection with the accompanying drawings which illustrate preferred embodiments meeting with the principle of the invention.

### BRIEF DESCRIPTION OF THE DRAWINGS

**Fig. 1** is a fragmentary section showing the conventional tool holding portion moving device;
**Fig. 2** is an illustration of a tool motion path in the conventional method;
**Fig. 3** is an enlarged illustration showing an entry point of the tool motion path in the conventional method;
**Fig. 4** is a partially neglected fragmentary longitudinal section of one embodiment of a tool holding portion moving device according to the present invention;
**Fig. 5** is an explanatory illustration showing a relationship between two rotary bodies in the concrete example illustrated in **Fig. 1**;
**Fig. 6** is an explanatory illustration of a tool motion path in the method according to the present invention;
**Fig. 7** is an explanatory illustration showing an acceleration and deceleration at a preparatory motion path and a terminating motion path;
**Fig. 8** is an illustration of a tool motion path in case that the tool motion path is a quadrangular configuration;
**Fig. 9** is a fragmentary longitudinal section showing one example of a compass machining device;
**Fig. 10** is a partial front elevation of the compass machining device provided with a gap sensor; and
**Fig. 11** is an enlarged section taken along line **XI** - **XI** of **Fig. 10**.

### DETAILED DESCRIPTION OF THE PREFERRED EMBODIMENT

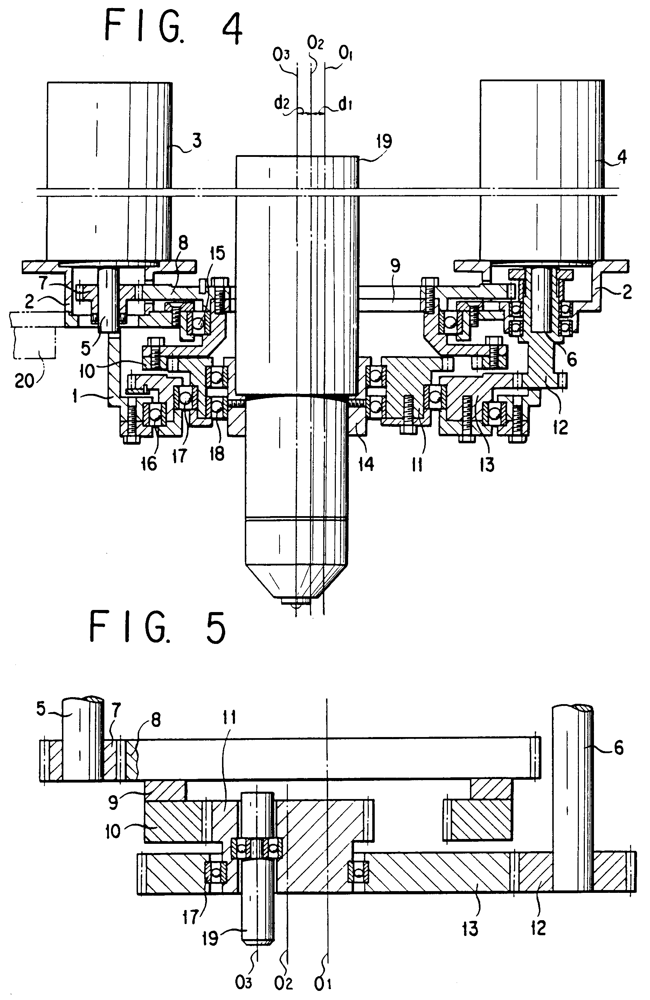

Some concrete embodiments of the present invention will be discussed hereinafter with reference to the accompanying drawings (**Fig. 4** through **Fig. 11**).

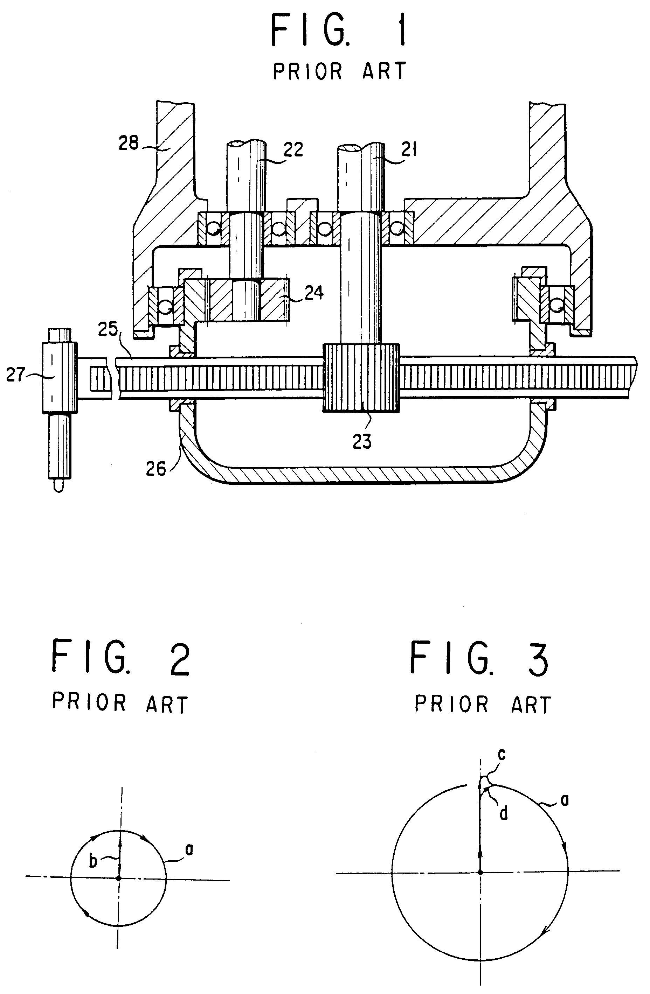

At first, as the first concrete embodiment of the present invention, an application of a tool holding portion moving device in an industrial robot for a plasma arc cutting machine, will be discussed with reference to **Figs. 4** and **5**. It should be noted that **Fig. 5** illustrates only two rotary bodies (gear system) in the device of **Fig. 1**.

In a tool holding portion moving device according to the present invention, a larger diameter portion of a cylindrical frame **1** which has the larger diameter portion and a smaller diameter portion on the outer peripheral portion, is fixed to a member **20** corresponding to an arm of a robot body. The frame **1** supports mutually independent gear systems as two rotary bodies therein, and also supports two motors at the upper portion for driving the two gear systems.

Namely, on the upper surface of the frame **1**, motor mounting bases **2** are fixed at two portions, each at left and right sides. Motors **3** and **4** are arranged thereon respectively.

The above-mentioned motors moves a tool mounting plate **14**, namely a machining tool **19**, via the gear systems. Power transmission system for these motors will be given herebelow.

### Output Transmission Structure of First Motor:

On a drive shaft **5** of the first motor **3**, an external gear **7** is rigidly secured at the position inside of the motor mounting base **2**. An external gear **8** meshing with the external gear **7** has a diameter close to the internal diameter of the frame **1** and supported by a bearing **15** rigidly secured on the frame **1** so as to rotate about the center axis **O₁** of the frame **1**. At the center of the external gear **8**, an opening for movement of the machining tool **17**, such as a torch of the plasma arc cutting device, is formed.

To the external gear **8**, a coupling body **9** is rigidly secured at the lower portion thereof. The coupling body **9** is also formed with an opening at the center thereof. To this coupling body **9**, an internal gear **10** is rigidly secured at the lower portion thereof. The internal gear **10** is coupled with the external gear **8** via the coupling body **9** to rotate about the center axis **O₁** of the frame **1**. The diameter of the internal gear **10** is slightly smaller than that of the external gear **8**. An external gear **11** meshing with the internal gear **10** rotates within the internal gear **10** about a rotational axis **O₂** offsetting from the center axis **O₁** by a distance **d₁**. The external gear **11** holds therein a torch **19** of the plasma arc cutting device as the machining tool via a tool mounting plate **14** which is supported by a bearing **18**.

The torch **19** of the machining tool is mounted along a mounting position center axis **O₃** which is distanced from the rotational axis **O₂** by a distance **d₂**.

### Output Transmission Structure for Second Motor 4:

On a drive shaft **6** of the second motor **4**, an external gear **12** is rigidly secured. An external gear **13** meshing with the external gear **12** has a diameter close to the internal diameter of the frame **1**. The external gear **13** is supported by a bearing **15** which is rigidly secured on the frame **1** so that it rotates about the center axis **O₁** of the frame **1**. The external gear **13** supports the external gear **11** therewithin via a bearing **17**.

### Movement of Tool Holding Portion:

In the construction set forth above, discussion will be given for the motion caused in the tool holding portion.

The revolution of the first motor **3** is transmitted to the external gear **8** via the external gear **7**. As a result, the external gear **8** drives the internal gear **10** which is fixed via the coupling body **9** to rotate. Then, the external gear **11** meshing with the internal gear **10** is driven to rotate about the rotational axis **O₂**. Thus, the torch **19** of the machining tool which is held inside of the external gear **11** via the bearing **18**, rotatingly moves about the rotational axis **O₂**.

On the other hand, the revolution of the second motor **4** is transmitted to the external gear **13** via the external gear **12**. The external gear **13** is thus rotated about the center axis **O₁**. The external gear **11** supported within the external gear **13** via the bearing **17**, is thus rotatingly moved about the center axis **O₁**. This, the torch **19** of the machining tool **19** which is held within the external gear **11** is rotatingly moved about the center axis **O₁**.

As set forth, by causing two rotational motions about mutually different rotational centers and simultaneously controlling these two revolutions, only holding portion, i.e. the machining tool, can be moved without requiring motion of the arm **20** of the robot body.

On the other hand, although the present invention is illustrated in terms of an application for the industrial robot, it is applicable for systems other than the industrial robot. For instance, even in a movable table, such as X-Y table, it becomes possible to move only the tip end of the table without moving the table body by providing the holding portion moving device according to the present invention.

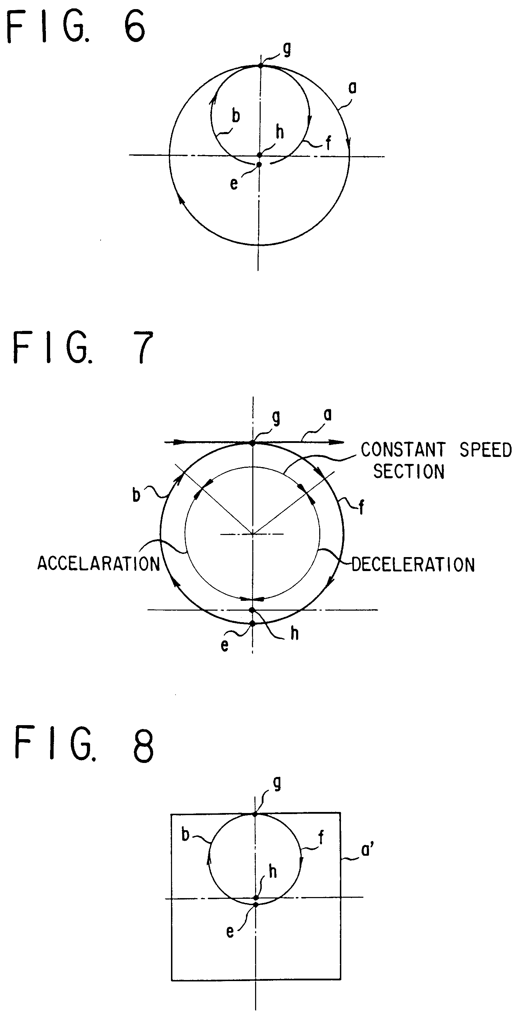

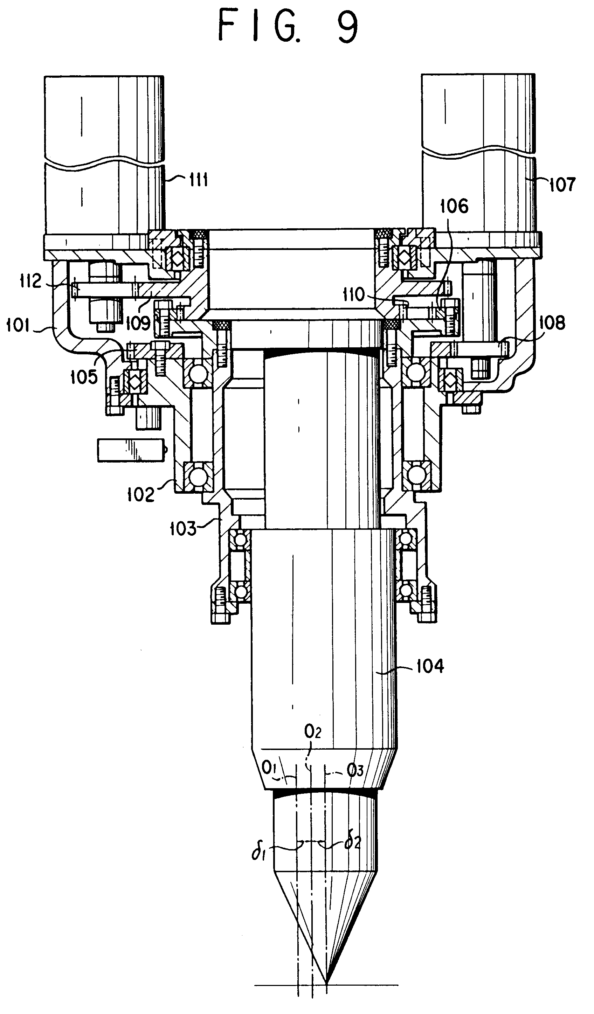

Subsequently, a tool motion path plating method of the above-mentioned tool holding portion moving device will be discussed in connection with **Fig. 6** through **Fig. 9**. It should be noted that a compass machining device is exemplary illustrated as the industrial robot as shown in **Fig. 9**.

**Fig. 9** shows one example of the compass machining device as the second embodiment. In the drawing, the reference numeral **101** denotes a frame. On the frame **101**, a first support cylinder **102** as a rotary body is supported for rotation about **O₁**. On the first support cylinder **102**, a second support cylinder **103** as a rotary body is supported for rotation about **O₂** which is offset from **O₁** by a distance δ₁. In addition, on the second support cylinder **103**, a torch **104** as the machining tool is supported for rotation about **O₃** which is offset from **O₂** by a distance δ₂.

On the first support cylinder **102**, a first driven gear **105** is rigidly secured. Also, a second driven gear **106** is rigidly secured on the second support cylinder **103**. The first driven gear **105** is meshed with a first drive gear **108** which is driven by a first motor **107**. On the other hand, on the frame **101**, a first and second intermediate gears **109** and **110** which are formed integral fashion, are supported for rotation about **O₁**. The first intermediate gear **109** is meshed with a second drive gear **112** which is driven by a second drive motor **111**. The second intermediate gear **110** is meshed with the second driven gear **106**.

The compass machining device constructed as set forth above, the torch **104** is moved along various path of circular, quadrangular or elliptic configuration by controlling revolution of the first and second motors **107** and **111**.

Next, a control method for tool motion path plotting in the above-mentioned compass machining device will be discussed with reference to **Fig. 6** to **Fig. 8**.

**Fig. 6** shows the case where the tool motion path **a** is in circular configuration. A preparatory motion path **b** from a starting point **e** to the tool motion path **a** and a terminating motion path **f** after finishing cutting operation through the tool motion path **a** are both arc shaped configuration so as to enter into and exit from the tool motion path **a** in tangential direction.

On the other hand, the motion speed on the preparatory motion path **b** from the starting point **e** to the entry point **g** where the path enters into the tool motion path **a**, is progressively accelerated from zero to the speed at the tool motion path **a**. On the other hand, the motion speed on the terminating path **f** is progressively decelerated from the speed at the tool motion path **a** to zero. As shown in **Fig. 7**, this acceleration and deceleration is performed so that acceleration at the speed at the tool motion path **a** is achieved in the preparatory motion path **b** slightly before reaching the entry point **g** to enter into the tool motion path **a** at a constant speed, and the terminating path **e** is entered at the constant speed at the speed of the tool motion path **a** and then decelerated to zero at reaching the starting point **e**.

At this time, it is possible to perform acceleration and deceleration in such a manner that acceleration is performed over the path between the starting point **e** and the entry point **g** to achieve the constant speed at the tool motion path **a** just at the entry point **g** and deceleration is started immediately after passing the entry point **g**.

Although the circular tool motion path **a** is illustrated in **Fig. 6**, the same process is applicable for the quadrangular motion path **a**' as illustrated in **Fig. 8**.

In the above-mentioned motion path control method, examples (1) to (4) in actual process of cutting will be discussed.
(1) When a square of 3 x 3 mm is cut at a motion speed of 2 m/min through the tool motion path, the path accuracy was ±0.045 mm.
(2) When a circle of 3 mm diameter is cut at a motion speed of 3 m/min through the tool motion through the tool motion path, the path accuracy was ±0.045 mm.
(3) When a circle of 20 mm diameter is cut at motion speed of 3 m/min through the tool motion through the tool motion path, the path accuracy was ±0.019 mm.
(4) When a square of 14 x 14 mm is cut at a motion speed of 3 m/min through the tool motion path, the path accuracy was ±0.035 mm.

In each example, the entry point **g** of the preparatory motion path **b** to the tool motion path **a** is quite smooth in the extent that the entry point cannot be perceptive. This is because that the torch does not stops at the entry point.

On the other hand, in the foregoing embodiment, the starting point **e** of the preparatory motion path **b** is set at a position offsetting from the center of the tool motion path **a**, namely from the center **h** of a compass coordinate system in a direction away from the the entry point **g**.

By offsetting the start point **e** from the center **h** of the compass coordinate system, the angular velocity control for the motor can be arbitrary performed when the arc shaped preparatory path **b** is adjoined to the tool motion path **a**. This permits to set the motion speed at the starting of the preparatory motion at an approximately equal speed to that at the tool motion path.

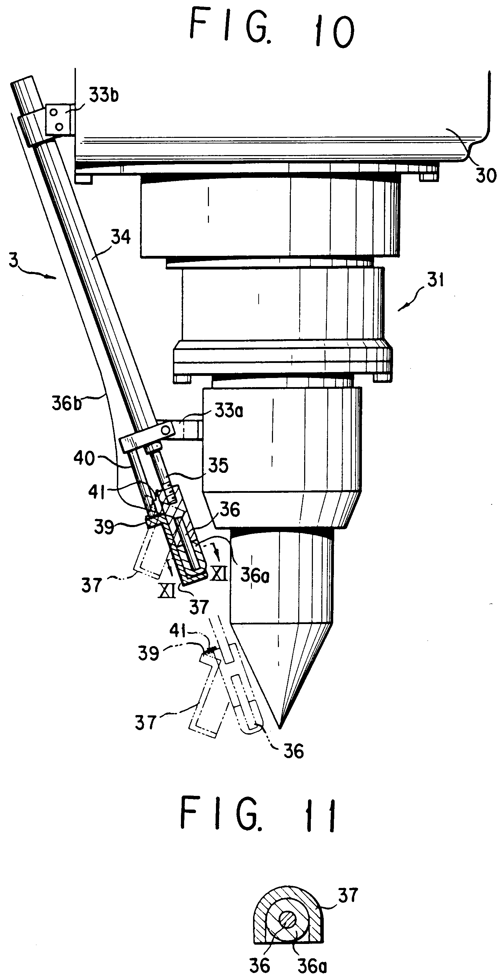

Furthermore, as the third concrete embodiment, there is illustrated a device, in which a gap sensor is provided for measuring a gap between a workpiece and the machining tool, in **Figs. 10** and **11**.

In the drawings, the reference numeral **31** denotes a torch of a machining device as a machining tool, **32** denotes a gas sensor mounted on the side portion of the torch **31**. The gap sensor **32** comprises an air cylinder which is mounted on the torch **31** via a stay **33a** at one end and on a tool holding portion **30** via a stay **33b** at the other end and serves as an actuator, a proximity switch **36** coupled with the tip end of a piston rod **35**, and a switch cover **37** rotatably mounted on the base portion of the proximity switch **36**. The above-mentioned proximity switch **36** is molded in a protective material, such as a fluorocarbon resin **36a**.

To the above-mentioned air cylinder **34**, the proximity switch **36** is mounted so that the tip end thereof moves back and forth toward the position in the vicinity of the tip end of the torch **31**. The proximity switch **36** is adapted to reciprocally stroke from a position projecting from the tip end of the torch **31** slightly, e.g. 1 mm to a position sufficiently retracted. The reference numeral **36b** denotes a sensor cable.

The switch cover **37** is in essentially semi-cylindrical configuration with a closed tip end so that it may cover the proximity switch **36** at the condition rotated toward thereto. The switch cover is biased in a direction away from the proximity switch **36** by means of a spring **41** provided at the rotational base portion. A projection **39** is provided at the base portion of the switch cover **37**. On the other hand, a pin **40** directed toward the projection **39** is provided on the stay **33a** at the tip end. When the proximity switch **36** is in the retracted position, the pin **40** contacts with the projection **39** to rotate the switch cover **37** toward the proximity switch **36** against the spring **40**.

The switch cover **37** is adapted to protect the proximity switch **36** from spatter, and is formed of a fluorocarbon resin type material, on which the spatter is hardly adhere.

On the other hand, the air cylinder **34** may expand and contract by supplying air at both sides. Also, it is possible to cause contracting motion by means of a spring force.

In the construction set forth above, when cutting operation by means of the torch **31** is to be performed, the torch **31** is placed in the proximity of the workpiece in the position where the proximity switch **36** is extended for projecting. When the distance between the workpiece and the proximity switch **36** reaches a given distance, the proximity switch **36** turns ON to notice that a gap between the torch **31** and the workpiece becomes a predetermined distance. Here, by setting the proximity switch **36** to turn ON at a distance 3 mm from the workpiece, and projecting the proximity switch **36** from the tip end of the torch **31**, the distance between the torch **31** and the workpiece at ON position of the proximity switch, becomes 2 mm.

When the above-mentioned position of the torch **31** is established, the air cylinder **34** is actuated for contracting stroke to retract the proximity switch **36** to a position not interfering cutting operation by the torch **31**. At this time, at the retracted position, the projection **39** of the switch cover **37** contacts with the pin **40** of the stay **33a** to rotate the switch cover **37** toward the proximity switch **36** so that the outside of the proximity switch **36** is covered by the switch cover **37** to protect the proximity switch **36** from spatter.

It should be noted that upon movement of the torch **31** after establishing the operation start position of the torch **31**, the distance to the workpiece is measured by a known arc sensor utilizing a potential difference generated between the torch **31** and the workpiece.

## Claims

1. A tool holding portion moving device for an industrial robot or so forth comprising:
a frame rigidly secured on an arm of the industrial robot or so forth;
two motors supported on said frame, both being operable under simultaneous control;
two rotary bodies supported in said frame in eccentric fashion relative to each other and driven independently by each of said motors;
a single tool holding portion eccentrically arranged relative to both of said rotary bodies and supported on these rotary bodies to be transmitted mutually different rotational motion from said two rotary bodies[; and
a control device simultaneously controlling revolution of said two motors].

2. A tool holding portion moving device as set forth in claim 1, wherein each of said two rotary bodies is a gear [system].

3. A tool holding portion moving device as set forth in claim 1, which further comprises a gap sensor for measuring a gap between a workpiece to be machines and [said] a tool.

4. A tool holding portion moving device as set forth in claim 3, wherein said gap sensor comprises an actuator supported on said tool holding portion at one end and on said tool at the other end respectively by stays, and a proximity switch mounted on a tip end of a piston rod of said actuator, which piston rod is movable for expanding and constructing, and placed at a position in the vicinity of a tip end of said tool at the expanded position of said piston rod.

5. A tool holding portion moving device as set forth is claim 4, wherein said proximity switch is molded within a protective material.

6. A tool holding portion moving device as set forth in any one of claims 4 and 5, wherein said proximity switch comprises a switch cover for protecting said proximity switch and means for biasing said switch cover into a non-cover state when said piston rod of said actuator is operated for expansion and into a cover state when said piston rod is retracted.

7. A method for plotting a tool motion path comprising the steps of:
controlling rotation of two rotary bodies rotatably supported within a frame in eccentric fashion,
moving a tool supported by a tool holding portion located eccentrically on said rotary bodies for moving the tool along a desired motion path, [wherein] and along a preparatory motion path, which preparatory motion path extends between a motion start point to an entry point into a motion path, [extends] and transit to said desired motion path in tangential direction to said desired motion path.

8. A method for plotting a tool motion path as set forth in claim 7, wherein said start point of said preparatory motion path is offset from a center of a compass coordinate system of a tool moving device.

9. In a machining system for machining a workpiece by shifting a working end along a desired tool motion path, a device for moving said working end comprising:
a working end carrying body carrying said working end;
a first rotary body associated with said working end carrying body and driven at a controlled first angular velocity for moving the wording end along a first circular path;
a second rotary body associated with said working end carrying body and driven at a controlled second angular velocity in cooperation with said first rotary body for moving the working end along a second circular path which is combined with said first circular path for establishing said tool motion path as composite path of said first and second circular paths;
a first driving means for driving said first rotary body at said first angular velocity; and
a second driving means for driving said second rotary body at said second angular velocity.

10. A device as set forth in claim 9, wherein said first rotary body is rotatable about a first rotational axis and said second rotary body is rotatable about a second rotational axis offsetting from said first axis by a given distance.

11. A device as set forth in claim 10, wherein said working end carrying body has a center axis offsetting from both of said first and second rotational axes.

12. A device as set forth in claim 9, wherein said first rotary body is rotatable about a first rotational axis; said second rotary body is rotatable about a second rotational axis offsetting from said first axis by a given distance; and said working end carrying body has a center axis offsetting from both of said first and second rotational axes.

13. A device as set forth in claim 12, wherein said working end carrying body is a rotary body rotatable about said second rotational axis, said first rotary body is associated with said working end carrying body in sun-and-planetary relationship to drive the later for causing orbital motion of said working end carrying said working end along said first circular path, and said second rotary body is associated with said working end carrying body in coaxial relationship to drive the latter for rotation carrying said working end along said second circular path.

14. In an industrial robot system having a robot arm carrying a working end, a device interposed between said robot arm and said working end for moving said working end relative to said robot arm, comprising:
a working end carrying body carrying said working end;
a first rotary body associated with said working end carrying body and driven at a controlled first angular velocity for moving the wording end along a first circular path;
a second rotary body associated with said working end carrying body and driven at a controlled second angular velocity in cooperation with said first rotary body for moving the working end along a second circular path which is combined with said first circular path for establishling said tool motion path as composite path of said first and second circular paths;
a first driving means for driving said first rotary body at said first angular velocity; and
a second driving means for driving said second rotary body at said second angular velocity.

15. A device as set forth in claim 14, wherein said first rotary body is rotable about a first rotational axis and said second rotary body is rotatble about a second rotational axis offsetting from said first axis by a given distance.

16. A device as set forth in claim 15, wherein said working end carrying body has a center axis offsetting from both of said first and second rotational axes.

17. A device as set forth in claim 14, wherein said rotary body is rotable about a first rotational axis; said second rotary body is rotatable about a second rotatable axis offsetting from said first axis by a given distance; and said working end carrying body has a center axis offsetting from both of said first and second rotational axes.

18. A device as set forth in claim 17, wherein said working end carrying body is a rotary body rotatable about said second rotational axis, said first rotary body is associated with said working end carrying body in sun-and-planetary relationship to drive the later for causing orbital motion of said working end carrying said working end along said first circular path, and said second rotary body is associated with said working end carrying body in coaxial relationship to drive the latter for rotation carrying said working end along said second circular path.

19. In an industrial robot system having a robot arm carrying a working end, a device interposed between said robot arm and said working end for moving said working end relative to said robot arm, comprising:
a working end carrying body carrying said working end;
a first rotary body associated with said working end carrying body and driven at a controlled first angular velocity for moving the wording end along a first circular path;
a second rotary body associated with said working end carrying body and driven at a controlled second angular velocity in cooperation with said first rotary body for moving the working end along a second circular path which is combined with said first circular path for establishing said tool motion path as composite path of said first and second circular paths;
a first driving means for driving said first rotary body at said first angular velocity; and
a second driving means for driving said second rotary body at said second angular velocity;
said first and second driving means cooperatively driving said first and second rotary bodies for initially moving said working end along a preparatory motion path between a motion start point to an entry point into said tool motion path, which preparatory motion path is oriented in tangential direction to said motion path at said entry point.

20. In an industrial robot system having a robot arm carrying a working end, a device interposed between said robot arm and said working arm for moving said working end relative to said robot arm, comprising:
a working end carrying body carrying said working end;
a first rotary body associated with said working end carrying body and driven at a controlled first angular velocity for moving the wording end along a first circular path;
a second rotary body associated with said working end carrying body and driven at a controlled second angular velocity in cooperation with said first rotary body for moving the working end along a second circular path which is combined with said first circular path for establishling said tool motion path as composite path of said first and second circular paths;
a first driving means for driving said first rotary body at said first angular velocity; and
a second driving means for driving said second rotary body at said second angular velocity;
said first and second driving means cooperatively driving said first and second rotary bodies for initially moving said working end along a preparatory motion path between a motion start point to an entry point into said tool motion path, which preparatory motion path is oriented in tangential direction to said motion path at said entry point, and said start point of said preparatory motion path is offset from first rotational axis.
